(19) Europäisches Patentamt
European Patent Office
Office européen des brevets

(11) **EP 0 421 186 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.[6]: **H04N 7/30**

(21) Anmeldenummer: **90117973.9**

(22) Anmeldetag: **17.09.1990**

(54) **Verfahren zur Codierung beliebig geformter Bildsegmente**

Method for the coding of picture segments with an arbitrary shape

Procédé pour coder des segments d'image de forme arbitraire

(84) Benannte Vertragsstaaten:
**DE FR GB IT NL**

(30) Priorität: **06.10.1989 DE 3933346**

(43) Veröffentlichungstag der Anmeldung:
**10.04.1991 Patentblatt 1991/15**

(73) Patentinhaber: **ANT Nachrichtentechnik GmbH**
**D-71522 Backnang (DE)**

(72) Erfinder: **Gilge, Michael, Dipl.-Ing.**
**Berkeley, CA 94704 (US)**

(56) Entgegenhaltungen:
**DE-A- 3 150 203       US-A- 4 797 742**

- **IEE PROCEEDINGS-F/COMMUNICATIONS, RADAR AND SIGNAL PROCESSING Bd. 135, Nr. 2, April 1988, STEVENAGE, GB Seiten 121 - 132; M. J. BIGGAR ET AL.: 'Segmeted-image coding : performance comparison with the discrete cosine transform'**
- **Proceedings of EUSIPO-88 Fourth European Signal Processing Conference Grenoble FR, 5.-8. September 1988, Seiten 855 858, Michael Gilge :'Coding of Arbitrarily Shaped Image Segments Using Moment Theory'**
- **N. I. ACHISER 'Vorlesungen über Approximationstheorie' 1967 , AKADEMIE VERLAG**
- **IEEE TRANSACTIONS ON CIRCUITS AND SYSTEMS Bd. CAS34, Nr. 11, November 1987, NEW YORK, US Seiten 1306 - 1336; M. KUNT ET AL.: 'Recent Results in High- Compression Image Coding'**
- **NACHRICHTENTECHNISCHE ZEITSCHRIFT Bd. 37, Nr. 5, Mai 1984, BERLIN, DE Seiten 290 - 297; KLAUS PABEL: 'Transformationen in der digitalen Signalverarbeitung Teil 1'**

**Beschreibung**

Die Erfindung betrifft ein Verfahren gemäß dem Oberbegriff des Patentanspruchs 1.

Zur Aufbereitung digitaler Bilddaten für die Übertragung über Kanäle mit begrenzter Übertragungskapazität ist es bekannt, eine Transformationscodierung, z.B. eine DCT (discrete cosine transform) - oder Walsh-Hadamard-Transformation zu verwenden (z.B. EP-0235803 A1; Esprit '86 Results and Achievements, Commission of the European Communities, Directorate General XIII, Telecommunications, Information, Industries & Innovation, Elsevier Science Publishers B.V., 1987 (North-Holland), Seiten 413 bis 422). Allen bisherigen Verfahren zur Transformationscodierung ist gemeinsam, daß die Bilder oder Teilbildbereiche (Segmente), die einer Transformation unterzogen werden sollen, rechteckige meist sogar quadratische Form besitzen. Die Bilder werden durch ein regelmäßiges Raster in Blöcke unterteilt und diese getrennt voneinander einer Transformationscodierung unterzogen. Die Randbedingung, daß ausschließlich rechteckige Teilbildbereiche transformiert werden können bewirkt, daß einerseits Störmuster in Form der durch das Blockraster vorgegebenen Unterteilung, sogenannte Blocking-Effekte, auftreten, andererseits werden gleichförmige Gebiete unnötigerweise unterteilt und damit die erreichbare Datenkompression eingeschränkt.

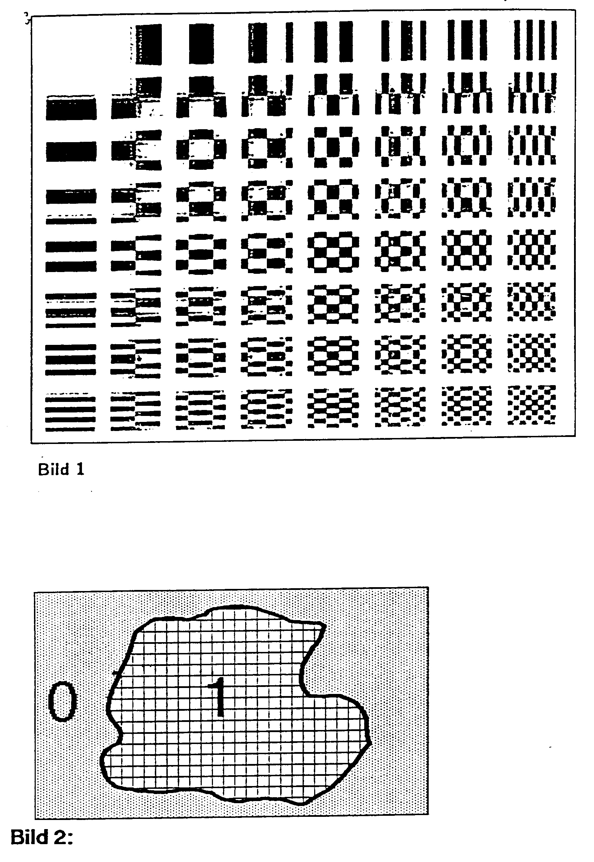

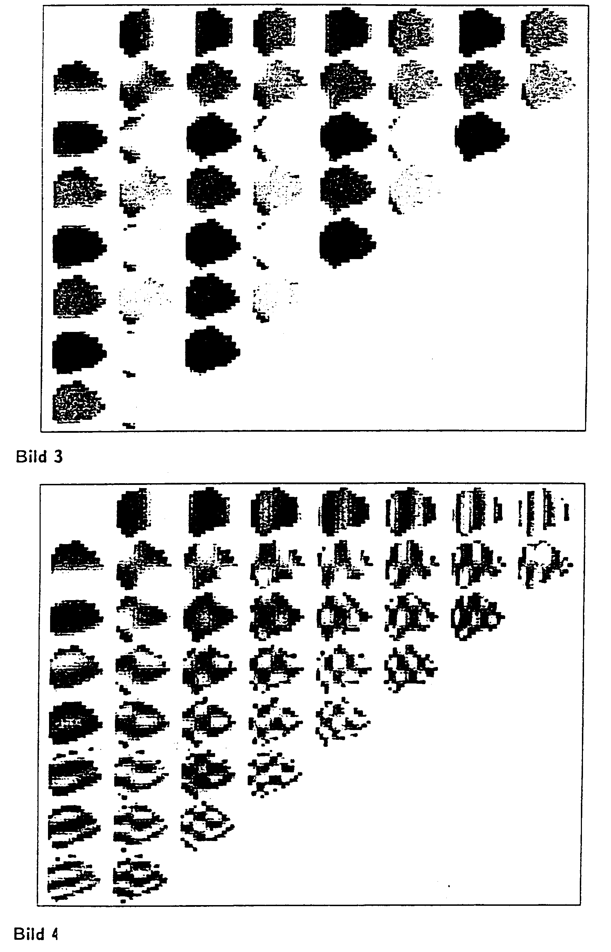

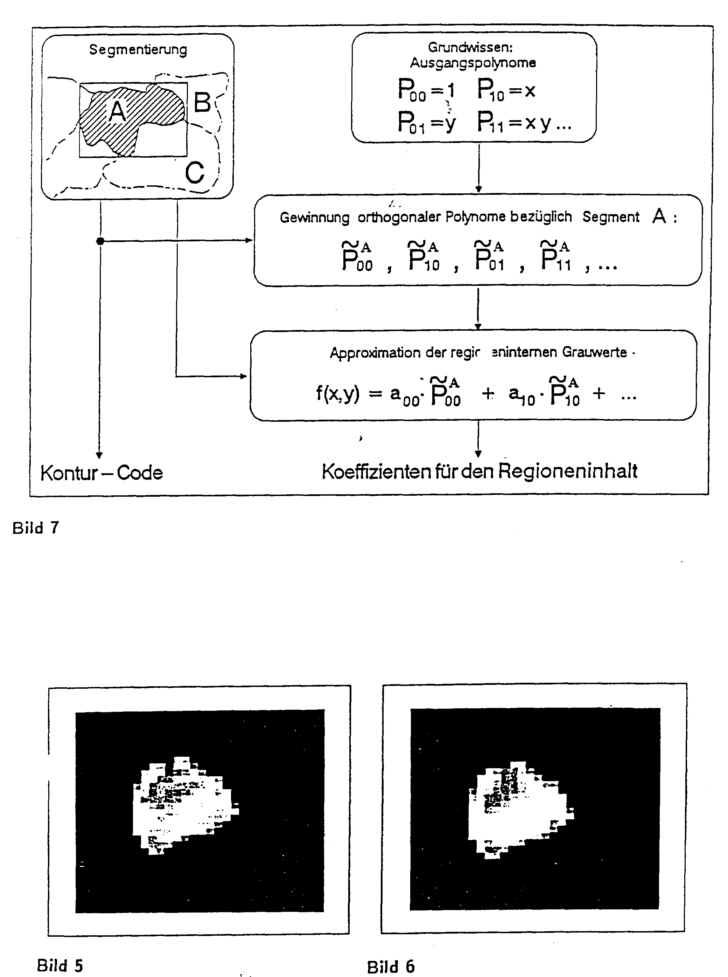

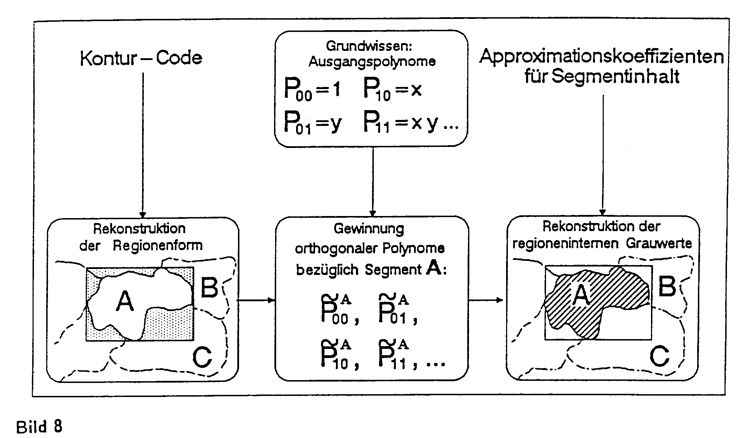

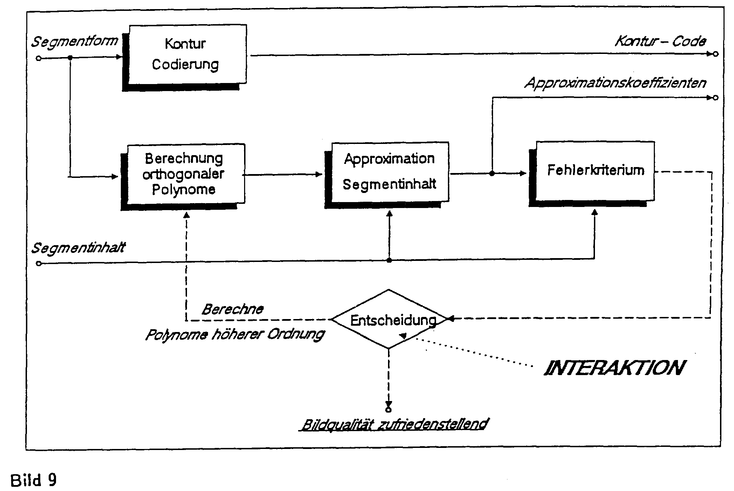

Gemäß Digital Image Processing, William K. Pratt, John Wiley & Sons Interscience Publication, New York, USA, Seiten 232 bis 278 kann die durch die Transformation gegebene Abbildung durch eine gewichtete Summe eines Satzes von Basisfunktionen dargestellt werden. Die Basisfunktionen liegen dabei fest (vgl. beispielsweise Seite 245, Figure 10.3-2, Cosine basis functions) und sind durch die Art der Transformation gegeben, z.B. in Form von Polynomen oder trigonometrischen Funktionen.

Aus Proceedings of EUSIPCO-88, Fourth European Signal Processing Conference Grenoble, France, 5.-8. September 1988, Seiten 855 bis 858, Michael Gilge: "Coding of Arbitrarily Shaped Image Segments Using Moment Theory" wird in Abweichung der bisherigen Bildblockverarbeitung vorgeschlagen, eine Teilbildsegmentierung anhand eines Ähnlichkeitskriteriums vorzunehmen. Segmente mit hohem Bewegungsanteil werden rekonstruiert durch orthogonale Momente höherer Ordnung, wohingegen andere Segmente durch Mittelwerte, z.B. durch Momente nullter Ordnung, beschrieben werden.

Aufgabe der Erfindung ist es das Verfahren ausgehend vom Oberbegriff des Patentanspruchs 1 so weiterzubilden, daß keine störenden Blocking-Effekte auftreten und keine Einschränkung der Datenkompression durch eine Blockeinteilung auftritt. Diese Aufgabe wird durch die kennzeichnenden Schritte des Patentanspruchs 1 gelöst. Die weiteren Patentansprüche zeigen Weiterbildungen des Verfahrens auf.

Die Erfindung beruht auf folgenden Erkenntnissen: Die Teilbildbereiche (Segmente), die der Transformationsvorschrift unterzogen werden, können abweichend von bisherigen Transformationsverfahren beliebig geformt sein und insbesondere dem lokalen Bildinhalt derart angepaßt werden, daß die Segmente ähnliche Strukturen enthalten wie der lokale Bildinhalt. Durch diese Ähnlichkeiten lassen sich Bildstrukturen mit einer geringeren Zahl von Koeffizienten beschreiben als bei bisher üblichen Verfahren. Diese Koeffizienten können darüberhinaus zur weiteren Datenreduktion noch grob quantisiert werden. Es ist somit eine annähernde Beschreibung eines Segments durch eine geringere Menge von Koeffizienten möglich, als Bildpunkte vorhanden sind. Für gleichförmige Bildgebiete müssen keine unnötigen Bilddaten aufbereitet werden. An die Form der sogenannten Segmente werden keinerlei Bedingungen geknüpft, selbst mehrfach zusammenhängende Gebiete (Segmente die Löcher enthalten) sind zulässig.

Die Erfindung wird nun anhand von Bildern näher erläutert. Es zeigen

Bild 1    DCT-Basisbilder,
Bild 2    ein Beispiel einer zweiwertigen Fensterfunktion mit einem Gitter, welches das zugrundeliegende Abtastraster symbolisiert,
Bild 3    Basisbilder von nicht-orthogonalen Ausgangspolynomen,
Bild 4    Basisbilder von orthogonalen Polynomen,
Bild 5    eine Darstellung eines Originalsegmentes,
Bild 6    eine Darstellung eines rekonstruierten Segmentes,
Bild 7    die Struktur für einen regionenorientierten Coder,
Bild 8    die Struktur für einen regionenorientierten Decoder und
Bild 9    ein Übersichtsbild für progressiven Bildaufbau mit variabler Rekonstruktionsqualität.

Zur Beschreibung der Erfindung wird zunächst das Grundprinzip der Transformationscodierung erläutert.

Die Transformationscodierung besteht aus einer Abbildungsvorschrift von dem Raum der Bildpunkte in einen Koeffizientenraum, auch Spektralbereich genannt. Die Transformation als solche bewirkt dabei keinerlei Datenreduktion und ist vielmehr eine eineindeutige Abbildung. Das bedeutet, daß die originale Bildfunktion aus der Koeffizientendarstellung fehlerfrei rekonstruiert werden kann. Der Vorteil der Transformation besteht vielmehr in der Verringerung der Korrelationen, die zwischen den Bildpunkten im Originalbild bestehen. Außerdem weisen die Koeffizienten mit steigender Ordnung stark abnehmende Amplituden auf, so daß eine angenäherte Beschreibung des Originalbildes mit einer Untermenge der Koeffizienten erfolgen kann, indem zum Beispiel die Koeffizienten mit den größten Amplituden zu einem Empfänger übertragen werden. Der Empfanger führt die inverse Transformationsvorschrift aus, wobei nicht übertragene Koeffizienten zu Null angenommen werden. Zur Übertragung mussen die reellwertigen Koeffizienten außerdem quantisiert werden, wodurch ein weiterer Fehler eingeführt wird. In Abhängigkeit von der Anzahl der übertragenen Koeffizienten und von der Quantisierung der Amplituden erhält man im Empfänger eine mehr oder weniger verfälschte Rekonstruktion des Originalbildes. Gleichzeitig wurde jedoch zur Übertragung eine weit geringere Datenrate benötigt als dies für das Originalbild der Fall gewesen wäre.

Die durch die Transformation gegebene Abbildung kann anschaulich mit Hilfe von Basisbildern verdeutlicht werden. Die Bildfunktion wird durch eine gewichtete Summe von Basisbildern dargestellt. Die Basisbilder liegen dabei fest und sind durch die Art der Transformation gegeben. **Bild 1** zeigt den durch die Diskrete Cosinus Transformation (DCT) definierten Satz von Basisbildern für quadratische Bildbereiche (Blöcke) der Größe 8x8 Bildpunkte. Die Gewichtsfaktoren für die Basisbilder sind die Koeffizienten. Durch entsprechende Wahl der Koeffizienten lassen sich beliebige Grauwertverteilung in dem Block darstellen. Da die feineren Strukturen seltener vorkommen und auch vom menschlichen Auge viel toleranter beobachtet werden, genügt meist eine gewichtete Kombination niederfrequenter Basisbilder, wie sie in der linken oberen Ecke von Bild 1 zu finden sind.

Mathematisch kann die Darstellung eines rekonstruierten Bildblockes $g(x_k, y_l)$ durch N-Basisfunktionen $\varphi_i(x_k, y_l)$ wie folgt ausgedrückt werden:

$$g(x_k, y_l) = a_1 \varphi_1(x_k, y_l) + a_2 \varphi_2(x_k, y_l) + \dots + a_N \varphi_N(x_k, y_l)$$

Die Basisfunktionen $\varphi_1, \varphi_2, \dots \varphi_N$ werden, wie oben erwähnt, durch die Transformation festgelegt. Der gesuchte Parametervektor der Koeffizienten $a^N = [a_1, a_2, \dots a_N]$ minimiert den quadratischen Fehler zwischen der Rekonstruktion $g$ und der ursprünglichen Bildfunktion $f$:

$$E = \|g - f\|^2 = \sum_k \sum_l \left( \sum_{n=1}^{N} a_n \varphi_n(x_k, y_l) - f(x_k, y_l) \right)^2 \implies MIN$$

Dazu wird nach den Komponenten $a_q$ des Parametervektors $\vec{a}^N$ in bekannter Weise differenziert und die Ableitungen zu Null gesetzt:

$$\frac{\partial E}{\partial a_q} = 2 \sum_k \sum_l \left( \sum_{n=1}^{N} a_n \varphi_n(x_k, y_l) - f(x_k, y_l) \right) \cdot \varphi_q(x_k, y_l) \overset{!}{=} 0 \qquad q = 1, \cdots, N$$

$$\Rightarrow \sum_{n=1}^{N} a_n \sum_k \sum_l \varphi_n(x_k, y_l) \varphi_q(x_k, y_l) \overset{!}{=} \sum_k \sum_l f(x_k, y_l) \varphi_q(x_k, y_l) \qquad q = 1, \cdots, N$$

Diese Gleichungen werden Normalgleichungen genannt. Zur Bestimmung der Koeffizienten, bzw. des Parametervektors $\vec{a}^N = [a_1, a_2, \dots a_N]$, ist eine Lösung der Normalgleichungen erforderlich. Die Lösbarkeit des aus $N$ Gleichungen bestehenden Gleichungssystems wird durch die Anzahl $M$ der gegebenen Bildpunkte innerhalb des Bildblockes und der Anzahl $N$ der unbekannten Koeffizienten $\vec{a}^N$ bestimmt. Folgende Fälle können unterschieden werden:

1. **M < N:** Die Parameter können nicht eindeutig bestimmt werden. Das Gleichungssystem ist <u>unterbestimmt</u>.

2. **M = N:** Für den Fall linear unabhängiger Basisfunktionen kann genau eine Lösung des Gleichungssystems garantiert werden. Die gegebenen Datenwerte werden auf ein Basisfunktionssystem, die Matrix der Basisfunktionen $\Phi$, abgebildet. Bei der Bestimmung der Parameter $\vec{a}^N$ handelt es sich um eine **Transformation** in ein anderes Koordinatensystem. Durch Verwendung von Cosinusfunktionen als Basisfunktionensystem erhält man die bekannte DCT (discrete cosine transform).

3. **M > N:** In diesem Fall können die originale Bildfunktion $f(x_k, y_l)$ und die Rekonstruktion $g(x_k, y_l)$ nur in Ausnahmefällen übereinstimmen, da das Gleichungssystem mehr Gleichungen als Unbekannte hat. Anschaulich gesprochen wird versucht, eine durch zwei Parameter gegebene Gerade durch mehr als zwei Punkte verlaufen zu lassen. Das Gleichungssystem ist <u>überbestimmt</u> und kann durch Verteilung des Fehlers auf alle Stützstellen im Sinne der Minimierung des mittleren Gesamtfehlers (**L**east **M**ean **S**quare = LMS) gelöst werden.

Überbestimmte Systeme ermöglichen in Bezug auf eine Datenkompression eine kompakte Beschreibung, da die gegebenen Funktionswerte durch eine geringere Zahl von Parametern als vorhandener Datenwerte beschrieben werden. Außerdem ist diese Art der Ausgleichung des Fehlers in der Lage, die Wirkung stochastischer Fehler in den Datenpunkten zu reduzieren.

Das zu lösende Gleichungssystem der Normalgleichungen ist gekoppelt und mathematisch nicht unbedingt gut konditioniert. Um eine Lösung für den Parametervektor $\vec{a}^{N}$ zu erhalten, kann der Gauß-Jordan Algorithmus (Bronstein/Semendjajew: "Taschenbuch der Mathematik", Verlag Harri Deutsch, 23. Auflage, Seiten 735 bis 737) verwendet werden, welcher rechentechnisch relativ aufwendig ist. Der mit dem obigen Ansatz verknüpfte Hauptnachteil liegt jedoch in der gekoppelten Natur der Gleichungen, die durch den Gauß-Jordan Algorithmus natürlich nicht verändert wird. Die Kopplung der Gleichungen äußert sich zum Beispiel in der Tatsache, daß beim Versuch die Approximationsgüte durch Hinzunahme weiterer Koeffizienten zu erhöhen, alle Gleichungen erneut gelöst werden müssen. Die Verbesserung einer bestehenden Approximation kann bei Anwendungen mit wachsendem Bildaufbeu oder adaptiven Verfahren von Bedeutung sein. Anders ausgedrückt verändern sich durch Hinzunahme oder Weglassen auch nur eines Approximationskoeffizienten sämtliche übrige Approximationskoeffizienten. Durch Verwendung eines orthogonalen Basisfunktionensatzes, der die folgende Orthogonalitätsbedingung erfüllt

$$\sum_k \sum_l \varphi_n(x_k, y_l) \cdot \varphi_q(x_k, y_l) = 0 \qquad \text{für} \quad n \neq q$$

vereinfacht sich die Lösung der Normalgleichungen mathematisch erheblich und die gewonnenen Koeffizienten sind zusätzlich unkorreliert. Daher werden ausschließlich orthogonale Basisfunktionen verwendet. Die in Bild 1 dargestellten Basisfunktion der DCT sind beispielsweise orthogonal.

Wegen der Orthogonalität ist das Gleichungssystem nun nicht länger gekoppelt und die Normalgleichungen

$$\sum_{n=1}^{N} a_n \cdot \sum_k \sum_l \varphi_n(x_k, y_l) \varphi_q(x_k, y_l) = \sum_k \sum_l f(x_k, y_l) \varphi_q(x_k, y_l) \qquad q = 1, \cdots, N$$

vereinfachen sich zu

$$a_q \cdot \sum_k \sum_l \varphi_q(x_k, y_l) \varphi_q(x_k, y_l) = \sum_k \sum_l f(x_k, y_l) \varphi_q(x_k, y_l) \qquad q = 1, \cdots, N$$

Die gesuchten Koeffizienten $a_q$ lassen sich also direkt berechnen:

$$\implies a_q = \frac{\sum_k \sum_l f(x_k, y_l) \varphi_q(x_k, y_l)}{\sum_k \sum_l \varphi_q(x_k, y_l) \varphi_q(x_k, y_l)} \qquad q = 1, \cdots, N$$

Die Basisfunktionen sind orthonormal wenn gilt:

$$\sum_k \sum_l \varphi_q(x_k, y_l) \varphi_q(x_k, y_l) = 1$$

Damit vereinfacht sich die Berechnung der Koeffizienten dann weiter zu

$$\implies a_q = \sum_k \sum_l f(x_k, y_l) \varphi_q(x_k, y_l) \qquad q = 1, \cdots, N$$

Durch die Einführung der Orthogonalität erhält man die Koeffizienten durch Abbildung der Bildfunktion auf das Basisfunktionensystem $\varphi_q(x, y)$. Insbesondere bleiben jetzt bei Hinzunahme weiterer Koeffizienten die Werte aller bisherigen Koeffizienten unverändert erhalten, da die Berechnung der Approximationskoeffizienten unabhängig voneinander erfolgt, sogenannte hierarchische Struktur der Beschreibung.

Das Problem, orthogonale Basisfunktionen bei beliebiger Regionenform zu bestimmen wird im folgenden beschrieben: Dazu wird eine Orthogonalisierung bezüglich zweidimensionaler Regionenformen vorgenommen. Zwei Funktionen $\varphi_n$ und $\varphi_q$ sind zueinander orthogonal, wenn ihr Skalarprodukt entsprechend der Bedingungsgleichung für die Orthogonalität verschwindet. Die Orthogonalisierung ist beispielsweise bekannt aus R.Zurmühl;"Praktische Mathematik für Ingenieure und Physiker, 3. Auflage 1961, Seiten 360 bis 362. Um eine Orthogonalität von zweidimensionalen Funktionen nur auf ein bestimmtes Gebiet der x,y-Ebene zu begrenzen, wird eine zweidimensionale Fensterfunktion w(x,y) eingeführt. Diese besitzt nur innerhalb des definierten Gebietes von Null verschiedene Werte. Ein Beispiel für eine zweiwertige Fensterfunktion bezogen auf eine beliebig berandete Region ist in Bild 2 dargestellt. Das Abtastraster (Gitter in Bild 2) entspricht genau dem Bildpunktraster des Originalbildes. Die Orthogonalitätsbedingung wird mit Hilfe der Fensterfunktion erweitert:

$$\sum_k \sum_l w(x_k, y_l)\varphi_n(x_k, y_l)\varphi_q(x_k, y_l) = 0 \qquad \text{für} \quad n \neq q$$

Die Summation ergibt nun nur innerhalb des Bildsegmentes von Null verschiedene Beiträge, entsprechend sind die Funktionen $\varphi_n$ und $\varphi_q$ orthogonal in Bezug auf die Form des Segmentes, ausgedrückt durch die Fensterfunktion. Anzumerken ist, daß durch Verwendung mehrwertiger Fensterfunktionen eine Ortswichtung vorgenommen werden kann. Davon wird jedoch im folgenden kein Gebrauch gemacht.

Es ist sofort einleuchtend, daß zwei gegebene Funktionen außer für den Fall trivialer Lösungen nicht gleichzeitig bezüglich verschiedener Gebietsformen orthogonal sein können. Andererseits variieren Bildsegmente in Bezug auf die Form und die Anzahl der eingeschlossenen Bildpunkte. Hieraus folgt, daß für jedes einzelne Bildsegment ein spezieller Satz von orthogonalen Basisfunktionen gefunden werden muß. Ein Bildblock stellt in diesem Zusammenhang eine spezielle Segmentform dar, für den nur eine einmalige Bestimmung von orthogonalen Basisfunktionen erforderlich ist, es sei denn, die Blockgröße würde variiert.

DaB zu jeder Segmentform ein Satz von orthogonalen Basisfunktionen existiert, wird durch das folgende Theorem garantiert:

Für einen linear unabhängigen Satz von Funktionen $\vec{u}_1, \vec{u}_2,..., \vec{u}_n$ in einem n-dimensionalen Unterraum $A^n$ existiert ein Satz von Funktionen $\vec{q}_1, \vec{q}_2,..., \vec{q}_n$, welche orthogonal bezüglich desselben Unterraumes $A^n$ sind. Diese orthogonalen Funktionen $q^n$ lassen sich sogar als Linearkombinationen der gegebenen Funktionen $\vec{u}_1, \vec{u}_2,..., \vec{u}_n$ darstellen.

Der Beweis dieses Theorems findet sich in der Literatur. Es läßt sich stets für beliebige Segmentformen ein linear unabhängiger Satz von Ausgangsfunktionen finden. Die rechentechnische Gewinnung der orthogonalen Basisfunktionen aus den linear unabhängigen nicht orthogonalen Ausgangsfunktionen kann mit Hilfe der aus der Mathematik bekannten Verfahren von Schmidt (N.I.Achiser: "Vorlesungen über Approximationstheorie, 2. Auflage 1967, Akademie Verlag, Seiten 24 bis 26) oder von Householder (A.S.Householder: "Principles of Numerical Analysis", Mc Gaw-Hill Book Company, 1953, Seiten 72 bis 78) erfolgen. Beide Verfahren liefern bis auf unterschiedliche Vorfaktoren die gleichen orthogonalen Funktionen. Im Gegensatz zum Verfahren nach Householder gestattet das Schmidtsche Verfahren die Gewinnung einzelner Funktionen, die zu den bereits berechneten orthogonal sind. Zur Veranschaulichung wird im folgenden am Beispiel eines Bildsegmentes und unter Verwendung des Schmidtschen Algorithmus eine Orthogonalisierung durchgeführt. Verwendet man die einfachen, linear unabhängigen Polynome $1,x,y,x^2,x\cdot y,y^2,...$ als Startfunktionen und legt ein rechteckiges Abtastraster zugrunde, liefert das Orthogonalisierungsverfahren die bekannten Gram-Schmidt Polynome. Diese weisen starke Ähnlichkeiten im Verlauf zu den Legendre-Polynomen auf, die ja nur bezüglich des kontinuierlichen Falles orthogonal sind. Die Verwendung trigonometrischer Funktion stellt insofern einen Sonderfall dar, als diese bezüglich rechteckiger Bildsegmente sowohl im diskreten als auch im kontinuierlichen Fall orthogonal sind. Für beliebig geformte Bildsegmente muß jedoch auch bei Verwendung von Sinus- oder Cosinusfunktionen ein Orthogonalisierungsverfahren verwendet werden.

An Hand einer vorgegebenen Segmentform sind die Basisbilder für die nicht orthogonalen Basisfunktionen $x^i \cdot y^j$ in Bild 3 abgebildet. Die Basisfunktionen sind auf dem kleinsten, das Segment umschließende Quadrat definiert, der Wertebereich der Koordinaten umfaßt das Intervall [-1,+1] sowohl in vertikaler als auch in horizontaler Richtung. Der Grad der dargestellten Basisfunktion steigt von Null (Konstante) in der linken oberen Ecke, für x in horizontaler und y in vertikaler Richtung hin an. Man erkennt daher jeweils die Funktionen $\varphi_{10} = x$ (horizontale Rampe) und $\varphi_{01} = y$ (vertikale Rampe) neben der konstanten Basisfunktion. Der Verlauf der übrigen Basisfunktionen für höhere Potenzen von x und y zeigt geringe Variation innerhalb des Segmentes, da die größten Änderungen im Verlauf in Richtung der Ränder, also für $|x|,|y| \rightarrow 1$, stattfinden.

Die hier gezeigten Basisfunktionen lassen sofort Schwierigkeiten bei Verwendung von nicht-orthogonalen Basisfunktionen mit höherem Grad als "eins" zur Bildapproximation verständlich erscheinen. In der Literatur gilt die Polynomapproximation aus den oben genannten Gründen oft zu Unrecht als wenig aussichtsreiches Verfahren zur Bildcodierung oder es wird berichtet, daß durch die Verwendung höherer Polynomgrade keine weitere Verbesserung erzielt werden kann. Die Konsequenz ist dann oft eine Segmentierung in eine übergroße Anzahl kleiner Segmente, welche sich hinreichend genau mittels Polynomen maximal erster Ordnung beschreiben lassen. Dieses Vorgehen steht jedoch im Widerspruch zu dem erwarteten Vorteil durch Codierung größerer Segmente. Gleichzeitig steigt die für die Codierung der Form benötigte Datenmenge stark an.

Die nach der Orthogonalisierung erhaltenen Polynome sind in **Bild 4** dargestellt. Deutlich sind nun die durch die verschiedenen Basisbilder repräsentierten Strukturen zu erkennen. Die Abbildung läßt unmittelbar eine gute Eignung dieser orthogonalen Funktionen zur Bildbeschreibung vermuten. Der Satz von neuen othogonalen Basisfunktionen umfaßt so viele Funktionen wie Bildpunkte innerhalb eines Bildsegmentes vorkommen. Er wird entsprechend der Transformationsvorschrift für rechteckförmige Bildbereiche zur Bestimmung der das Bildsegment beschreibenden Koeffizienten angewendet.

**Bild 5** zeigt den Grauwertverlauf innerhalb des Originalbildsegmentes. Die mittels der orthogonalen Polynome erzielte Rekonstruktion durch Polynome maximal 9. Grades ist in **Bild 6** dargestellt. Die Abbildung macht den rauschreduzierenden Effekt der Approximation deutlich. Gleichzeitig werden die segmentinternen Strukturen weit besser wiedergegeben, als dies zum Beispiel mit Polynomen zweiter Ordnung möglich gewesen wäre.

Ein Satz von othogonalen Basisfunktionen kann jeweils nur bezüglich einer speziellen Regionenform und nicht bezüglich mehrerer Formen gleichzeitig orthogonal sein. Das bedeutet aber im allgemeinen, daß nicht nur ein Kontur-Code zur Beschreibung der jeweiligen äußeren Begrenzung der Bildsegmente und die Approximationskoeffizienten für den Grauwertverlauf im Inneren, sondern auch das verwendete Basisfunktionensystem übertragen werden muß, um dem Empfänger die Rekonstruktion des Grauwertverlaufes zu ermöglichen. Der durch die Übertragung des Basisfunktionensystems verursachte 'Overhead' würde aber aller Wahrscheinlichkeit nach den Gewinn einer regionenorientierten Codierung kompensieren. Im folgenden wird nun eine Coderstruktur vorgestellt, die keine Übertragung des Basisfunktionensystems erfordert.

**Bild 7** zeigt ein Blockschaltbild einer Coderstruktur gemäß der Erfindung. Ausgehend von einer vorgegebenen Segmentierung erfolgt eine getrennte Codierung der Kontur (Forminformation für die äußere Begrenzung der Segmente) und des regioneninternen Grauwertverlaufes:

Der Kontur-Coder hat die Aufgabe, die Berandung des betrachteten Segmentes möglichst effizient darzustellen. Man unterscheidet allgemein eine exakte Codierung, zum Beispiel Lauflängencodierung, und eine approximative Codierung bezogen auf ein gewähltes Fehlermaß. Als Nachteil einer exakten Codierung kann der relativ hohe Bitbedarf angesehen werden, ungefähr 1,4 bit pro Konturpunkt wird in der Literatur berichtet. Im Fall einer approximativen Codierung werden zusätzlich Algorithmen benötigt, die auftretende Überlappungen benachbarter Gebiete oder 'Niemandsland' zwischen Regionen beseitigen. Außerdem muß die Kontur im Sender rekonstruiert werden, damit der Orthogonalisierungsvorgang auf der im Empfänger erhaltenen Kontur durchgeführt werden kann.

Zur Gewinnung des Kontur-Codes und entsprechender empfängerseitiger Rekonstruktion kann auf bekannte Verfahren zurückgegriffen werden, z.B. auf E.L.Hall: "Computer Image Processing and Recognition", Academic Press, Seiten 413 bis 420 (7.3.1 Boundary Description) oder auf A.K.Jain: "Fundamentals of Digital Image Processing", Prentice Hall, Seiten 362 bis 374 (9.6 Boundary Representation).

Die Codierung der regioneninternen Grauwerte erfolgt segmentweise. Am Beispiel des mit **A** markierten Segmentes erfolgt die Codierung folgendermaßen (Bild 7): Mit Hilfe eines Satzes von linear unabhängigen Basisfunktionen $P_{ij}$, dem

sogenannten Grundwissen, wird ein Satz von orthogonalen Basisfunktionen $\tilde{P}_{ij}^{A}$ bezogen auf die Form von Segment **A** generiert. Der Orthogonalisierungsvorgang benötigt dazu die Konturinformation. Die so gewonnenen orthogonalen Basisfunktionen werden zur Beschreibung des Grauwertverlaufes innerhalb der Region herangezogen. Segment **A** ist durch die Übertragung des Kontur-Codes und der Approximationskoeffizienten vollständig beschrieben.

Das Blockschaltbild des Decoders ist im **Bild 8** dargestellt. Zunächst wird aus der übertragenen Konturinformation die Form des Segmentes **A** rekonstruiert. Da der Empfänger mit dem gleichen Grundwissen ausgestattet ist, kann die Gewinnung der orthogonalen Basisfunktionen analog wie im Sender basierend auf der Form der Region erfolgen.

Nachdem die Form des Segmentes wiederhergestellt ist, wird die Orthogonalitätsbeziehung mit Hilfe der Fensterfunktion aufgestellt, wie zuvor beschrieben. Die Gewinnung der Basisfunktion erfolgt durch die bereits erwähnten Verfahren von Schmidt oder Householder. Kennzeichnend für die Verwendung der Fensterfunktion und damit der Orthogonalisierung bezüglich einer zweidimensionalen Form ist dabei, daß bei der Berechnung der neuen orthogonalen Basisfunktionen nur Abtastwerte der alten, nicht orthogonalen Basisfunktionen verwendet werden, die innerhalb der Begrenzung (Kontur) des Segmentes liegen.

Die zusätzliche Übertragung der orthogonalen Basisfunktionen für jedes Segment ist redundant, da der Konturcode die Information über die Basisfunktionen enthält. Der Grauwertverlauf innerhalb des Segmentes wird schließlich durch eine gewichtete Summe der Basisfunktionen wiederhergestellt. Die Approximationskoeffizienten bilden dabei die Gewichtsfaktoren.

Zusammenfassend ergibt sich der folgende Ablauf der Codierung und Decodierung jedes einzelnen Segmentes:

**Codierung:**

1. Beschreibung der Kontur des betrachteten Segmentes
2. Erzeugung eines Satzes orthogonaler Basisfunktionen für die spezielle Form
3. Approximation der segmentinternen Grauwerte

**Übertragung:**

    1. Konturcode
    2. Approximationskoeffizienten

**Decodierung:**

    1. Rekonstruktion der Form des Segmentes
    2. Erzeugung eines Satzes orthogonaler Basisfunktionen für die spezielle Form
    3. Rekonstruktion des Grauwertverlaufes

Verschiedene Parameter dieses Codierungsschemas können adaptiv an die aktuelle Anwendung angepaßt werden. Beispielhaft werden einige, die Codierung des Grauwertverlaufes betreffende Parameter im folgenden näher erläutert:

Der 'Grundwissen' genannte Satz der linear unabhängigen aber nicht-orthogonalen Ausgangsfunktionen, Bilder 7 und 8, ist natürlich nicht auf Polynome beschränkt. Man kann zeigen, daß die einzige an die Ausgangsfunktionen zu stellende Randbedingung die der linearen Unabhängigkeit ist, was jedoch keine wesentliche Einschränkung darstellt. Dies eröffnet die Möglichkeit, eine Vielfalt verschiedener Basisfunktionensätze als Ausgangspunkt für die Orthogonalisierung zu verwenden. Damit ergibt sich der Vorteil, die verwendeten Funktionen an die Eigenschaften des augenblicklich betrachteten Segmentes anzupassen: So können weiche Luminanzübergänge vorteilhaft durch Polynome dargestellt werden, während Walsh-Funktionen zur Codierung von Gebieten, welche beispielsweise Text enthalten, besser geeignet sind. Die Verwendung von Cosinus-Funktionen würde einer regionenangepaßten DCT entsprechen und könnte bei periodisch texturierten Segmenten gute Ergebnisse liefern.

Ein weiterer Adaptionsparameter ist die Anzahl der pro Segment verwendeten Approximationskoeffizienten oder äquivalent die Genauigkeit der Rekonstruktion. Durch die Verwendung von orthogonalen Basisfunktionen bleiben alle schon übertragenen Koeffizienten bei Verbesserung der Approximation durch höhere Ordnungen unverändert. Dies entspricht nicht nur dem Prinzip einer hierarchischer Darstellung, sondern eröffnet auch die im folgenden diskutierten Möglichkeiten eines 'wachsenden' Bildaufbaus, einer Interaktion mit dem Benutzer oder einer Adaption an den Bildinhalt.

Die Technik des progressiven Bildaufbaus wird beispielsweise bei der Übertragung von Bilddaten über niederratige Kanäle verwendet: Zunächst wird dem Betrachter eine grobe Bildstruktur oder ein tiefpaßgefiltertes Bild gezeigt, welches am Ende einer ersten Bildaufbauphase rekonstruiert wird. Sukzessive wird Detailinformation in weiteren Bildaufbauphasen hinzugefügt - durch Ermittlung zusätzlicher Basisfunktionen höheren Grades und zusätzlicher Koeffizienten bis die gewünschte endgültige Auflösung erreicht ist. Im Gegensatz zu einem zeilensequentiellen Bildaufbau wird dem Betrachter gleich zu Beginn der Übertragung verwertbare Information angeboten. Wegen der Eigenschaft der Orthogonalität der ermittelten Basisfunktionen behalten die während vorhergehender Bildaufbauphasen ermittelten Koeffizienten ihre Gültigkeit und brauchen daher nicht neu berechnet werden. Als ein Anwendungsbeispiel ist in diesem Zusammenhang das Abrufen von Bildern aus einer Datenbank zu nennen. Oft kann der Benutzer bereits in einem frühen Stadium des Bildaufbaus entscheiden, ob das Bild die gewünschte Information enthält. Er kann dann in Interaktion mit dem System die Übertragung weiterer Detailinformation veranlassen oder auch die Übertragung stoppen und so Zeit und Geld sparen.

Das Verfahren mit variabler Rekonstruktionsqualität ist schematisch in **Bild 9** dargestellt. Die Behandlung der Kontur und die Gewinnung der orthogonalen Basisfunktionen ist identisch zu der im Bild 7 gezeigten Coderstruktur. Die neuen, zusätzlichen Eigenschaften erfordern zwei weitere Blöcke: Eine Rekonstruktion des Grauwertverlaufes im Sender ermöglicht einen Vergleich mit dem Grauwertverlauf des Originalsegmentes. Bei einer nicht ausreichenden Codierqualität kann adaptiv oder durch Interaktion eine verbesserte Approximation durch Verwendung von Basisfunktionen höherer Ordnung erfolgen.

Im Rahmen eines Hybrid-Codecs zur Codierung von Videobildsequenzen wird eine Codierung nur derjenigen Teilbildbereiche des Restfehlerbildes vorgenommen, die sich durch besonders hohe Fehleramplituden auszeichnen und beliebig geformt sein können, wobei das Restfehlerbild durch Differenzbildung zwischen dem aktuellen Bild der Videosequenz und einer aus dem vorangegangenen codierten und decodierten Bild erzeugten Schätzbildes gewonnen wird. Speziell wird durch diese Anwendung die bisher übliche Beschreibung des Restfehlerbildes durch blockförmige Teilbildbereiche vermieden, die sich wegen der ausschließlich blockorientierten Transformationsvorschrift ergab, und damit eine unnötige Übertragung von Restfehlerbildpunkten mit verschwindenden Fehleramplituden innerhalb des gleichen Bildblockes verhindert.

**Patentansprüche**

1.    Verfahren zur Aufbereitung von digitalen Bilddaten, insbesondere für Übertragungszwecke über Kanäle mit begrenzter Übertragungskapazität, unter Verwendung einer Transformationscodierung, die das Videobild oder Teilbildbereiche durch eine Transformationsvorschrift in eine andere Darstellung überführen, wobei die Darstellung der Bilddaten durch eine der Bildpunktanzahl des Originalbildbereiches entsprechende Anzahl von Koeffizienten erfolgt, die aber im Gegensatz zu den Bildpunkten des Videobildes nur geringe Korrelationen aufweisen und auch stark unterschiedliche Amplituden besitzen, wodurch eine von der Ordnung der Koeffizienten abhängige Quantisierung derselben vorgenommen werden kann, die nach Umkehrung der Transformationsvorschrift eine angenäherte Rekonstruktion des Originalbildbereiches ergibt, gekennzeichnet durch folgende Schritte:

-   für beliebig geformte Teilbildbereiche, deren Konturen insbesondere den lokalen Bildstrukturen angepaßt sein können, wird die Transformationsvorschrift erzeugt indem ein Satz von zweidimensionalen linear unabhängigen Funktionen, sogenannten Basisfunktionen ermittelt wird, die beispielsweise die Abtastwerte von zweidimensionalen Polynomen oder trigonometrischer Funktionen darstellen, wobei die flächige Ausdehnung der Basisfunktionen etwa der Größe eines das zu codierende Segment umschreibenden Rechtecks entspricht und das Raster der Abtastwerte der Basisfunktionen dem Bildpunktraster des Originalbildes entspricht,

-   auf die Abtastwerte der Basisfunktionen, die sich innerhalb der durch einen Teilbildbereich begrenzten Fläche befinden, wird eine Orthogonalisierung angewendet zur Gewinnung eines Satzes von neuen, orthogonalen Basisfunktionen, wobei der Satz so viele Basisfunktionen umfaßt, wie Bildpunkte innerhalb des Teilbildbereiches vorkommen,

-   zur Bestimmung der den Teilbereich beschreibenden Koeffizienten wird der Satz neuer, orthogonaler Basisfunktionen angewendet.

2.  Verfahren nach Anspruch 1, dadurch gekennzeichnet, daß die Basisfunktionen vor der Orthogonalisierung bezogen auf den lokalen Bildinhalt so gewählt werden, daß die Teilbildbereiche ähnliche Strukturen aufweisen, die mit einer geringen Zahl von Koeffizienten beschreibbar sind.

3.  Verfahren nach Anspruch 2, gekennzeichnet durch die Wahl von Polynomen als Basisfunktionen bei weichen Luminanzübergängen.

4.  Verfahren nach Anspruch 2, gekennzeichnet durch die Wahl von Walsh-Funktionen als Basisfunktionen für Gebiete die Text enthalten.

5.  Verfahren nach Anspruch 2, gekennzeichnet durch die Wahl von Cosinus-Basisfunktionen bei periodisch texturierten Teilbildbereichen.

6.  Verfahren nach einem der Ansprüche 1 bis 5, dadurch gekennzeichnet, daß für eine Übertragung der Bilddaten nicht die orthogonalen Basisfunktionen selbst verwendet werden, sondern daß für jeden Teilbildbereich eine codierte Konturinformation und Approximationskoeffizienten zur Beschreibung des Grauwertverlaufes aufbereitet werden, die aus den orthogonalen Basisfunktionen bezogen auf die Form des Teilbildbereiches als deren Gewichtsfaktoren gewonnen werden.

7.  Verfahren nach Anspruch 6, dadurch gekennzeichnet, daß aus der übertragenen Konturinformation empfangsseitig die Form des Teilbildbereiches rekonstruiert wird, daß für die spezielle Form ein Satz orthogonaler Basisfunktionen erzeugt wird und daß der Grauwertverlauf innerhalb des Teilbildbereiches durch eine gewichtete Summe der Basisfunktionen wiederhergestellt wird, wobei die übertragenen Approximationskoeffizienten die Gewichtsfaktoren bilden.

8.  Verfahren nach einem der Ansprüche 1 bis 7, dadurch gekennzeichnet, daß eine Codierung nur derjenigen beliebig geformten Teilbildbereiche des Restfehlerbildes vorgenommen wird, die sich durch besonders hohe Fehleramplituden auszeichnen, wobei das Restfehlerbild durch Differenzbildung zwischen einem aktuellen Bild einer Videobildsequenz und eines aus dem zeitlich davor liegenden Bild erzeugten Schätzbildes gewonnen wird.

9.  Verfahren nach einem der Ansprüche 1 bis 8, dadurch gekennzeichnet, daß die Codierung eines Bildes der Videobildsequenz in mindestens zwei Bildaufbauphasen vorgenommen wird, derart, daß empfangsseitig am Ende der ersten Bildaufbauphase ein rekonstruiertes Bild aus einer ersten Anzahl der für jeden Teilbildbereich orthogonalen Basisfunktionen und Koeffizienten ermittelt wird und daß am Ende der zweiten Bildaufbauphase mit einer zweiten Anzahl zusätzlicher Basisfunktionen höheren Grades und zusätzlichen Koeffizienten eine verbesserte Rekonstruktion des Bildes ermittelt wird und daß gegebenenfalls am Ende weiterer Bildaufbauphasen weiter verbesserte Rekonstruktionen des Bildes erstellt werden.

10. Verfahren nach Anspruch 9, dadurch gekennzeichnet, daß die Zahl der Bildaufbauphasen in Abhängigkeit einer gewünschten Bildauflösung gesteuert wird.

## Claims

1. Method for conditioning digital image data, in particular for transmission purposes over channels having a restricted transmission speed, using transformation coding which transforms the video image or image segments into another representation by means of a transformation rule, the representation of the image data being performed by means of a number of coefficients corresponding to the number of pixels of the original image region, which coefficients, however, by contrast with the pixels of the video image exhibit only low correlations and also have very different amplitudes, as a result of which it is possible to undertake, as a function of the order of the coefficients, quantization of the latter which, after reversal of the transformation rule, produces an approximate reconstruction of the original image region, characterized by the following steps:

   - for arbitrarily shaped image segments whose contours can be matched, in particular, to the local image structures, the transformation rule is generated by determining a set of two-dimensional linearly independent functions, so-called base functions, which represent, for example, the sample values of two-dimensional polynomials or trigonometric functions, the areal extent of the base functions corresponding approximately to the size of a rectangle circumscribing the segment to be coded, and the raster of the sample values of the base functions corresponding to the pixel raster of the original image,
   - orthogonalization is applied to the sample values of the base functions, which are located inside the area bounded by an image segment, in order to obtain a set of new, orthogonal base functions, the set comprising as many base functions as pixels occurring inside the image segment,
   - the set of new, orthogonal base functions is applied in order to determine the coefficients describing the segment.

2. Method according to Claim 1, characterized in that referred to the local image content, before the orthogonalization the base functions are selected such that the image segments exhibit similar structures which can be described by means of a small number of coefficients.

3. Method according to Claim 2, characterized by the selection of polynomials as base functions in the case of soft luminance transitions.

4. Method according to Claim 2, characterized by the selection of Walsh functions as base functions for regions which contain text.

5. Method according to Claim 2, characterized by the selection of cosine base functions in the case of periodically textured image segments.

6. Method according to one of Claims 1 to 5, characterized in that the orthogonal base functions themselves are not used to transmit the image data, but that, for each image segment, for the purpose of describing the grey value characteristic a coded item of contour information and approximation coefficients are conditioned which are obtained from the orthogonal base functions referred to the shape of the image segment and the weighting factors of said base functions.

7. Method according to Claim 6, characterized in that the shape of the image segment is reconstructed at the receiving end from the transmitted contour information, in that a set of orthogonal base functions is generated for the special shape, and in that the grey value characteristic inside the image segment is restored by means of a weighted sum of the base functions, the transmitted approximation coefficients forming the weighting factors.

8. Method according to one of Claims 1 to 7, characterized in that coding is undertaken only of those arbitrarily shaped image segments of the residual error image which are distinguished by particularly high error amplitudes, the residual error image being obtained by forming the difference between a current image of a video image sequence and an estimated image generated from the image situated prior to the current image in time.

9. Method according to one of Claims 1 to 8, characterized in that the coding of an image of the video image sequence is undertaken in at least two display building phases in such a way that at the receiving end a reconstructed image is determined at the end of the first display building phase from a first number of base functions, which are orthogonal for each image segment, and coefficients, and in that an improved reconstruction of the image is determined at the end of the second display building phase by means of a second number of additional base functions of higher degree and additional coefficients, and in that reconstructions of the image which are further improved are produced, as the case may be, at the end of further display building phases.

10. Method according to Claim 9, characterized in that the number of display building phases is controlled as a function of a desired image resolution.

## Revendications

1. Procédé de traitement de données d'images numériques, notamment pour la transmission par des canaux ayant une capacité de transmission limitée, en utilisant une transformation de codage qui transpose l'image vidéo ou les zones d'images partielles, par une règle de transformation, en une autre représentation, la représentation des données d'images se faisant par un nombre de coefficients correspondant au nombre des points images de la zone d'images d'origines mais qui, contrairement aux points images de l'image vidéo ne présente que peu de corrélation et possède également des amplitudes très différentes, permettant ainsi d'effectuer une quantification indépendante de l'ordre des coefficients, et qui après inversion de la règle de transformation, donne une reconstruction approchée de la zone de l'image d'origine, procédé caractérisé en ce que :

   - pour des zones de parties d'images de forme quelconque, dont les contours peuvent être adaptés notamment aux structures locales des images, on crée la règle de transformation en déterminant un jeu de fonctions linéairement indépendantes, bidimensionnelles, dites fonctions de base qui représentent par exemple les valeurs de détection de polynômes ou de fonctions trigonométriques à deux dimensions, l'extension en surface des fonctions de base correspondant sensiblement à l'importance du rectangle circonscrit aux segments à coder, et la trame des valeurs de détection des fonctions de base correspondant à la trame des points images de l'image d'origine,
   - on orthogonalise les valeurs de détection des fonctions de base à l'intérieur de la surface délimitée par une zone de partie d'image, pour obtenir un jeu de nouvelles fonctions de base, orthogonales, le jeu comprenant autant de fonctions de base qu'il y a de points images dans la zone de partie d'image,
   - on détermine les coefficients décrivant la zone partielle en appliquant le jeu des nouvelles fonctions de base orthogonales.

2. Procédé selon la revendication 1, caractérisé en ce qu'on choisit les fonctions de base, avant l'orthogonalisation, en tenant compte du contenu local de l'image, les zones de partie d'image ayant des structures analogues pouvant se décrire par un nombre réduit de coefficients.

3. Procédé selon la revendication 2, caractérisé en ce que, pour des transitions douces de luminance, on choisit des polynômes comme fonctions de base.

4. Procédé selon la revendication 2, caractérisé en ce que, pour des domaines contenant du texte, on choisit des fonctions de Walsh comme fonctions de base.

5. Procédé selon la revendication 2, caractérisé en ce que, pour des zones d'images partielles à texture périodique, on choisit des fonctions de base cosinus.

6. Procédé selon l'une des revendications 1 à 5, caractérisé en ce que, pour une transmission de données d'images, on n'utilise pas les fonctions de base orthogonales directement mais, pour chacune des zones de parties d'images, on prépare une information de contour codée et des coefficients d'approximation pour décrire le profil des gris, que l'on obtient à partir des fonctions de base orthogonales rapportées à la forme de la zone de partie d'image comme leur coefficient de pondération.

7. Procédé selon la revendication 6, caractérisé en ce qu'à partir de l'information de contour transmise, on reconstruit en réception la forme de la zone de partie d'image et, pour la forme particulière, on génère un jeu de fonctions de base orthogonales, et en ce qu'on rétablit le profil des gris dans la zone de partie d'image par la somme pondérée des fonctions de base, les coefficients d'approximation transmis formant les coefficients de pondération.

8.	Procédé selon l'une des revendications 1 à 7, caractérisé en ce qu'on effectue un codage seulement des zones de parties d'images de forme quelconque de l'image d'erreur résiduelle qui se distinguent par une amplitude d'erreur particulièrement élevée, l'image d'erreur résiduelle étant obtenue en formant la différence entre une image réelle d'une séquence d'images vidéo, et une image évaluée obtenue à partir de l'image antérieure.

9.	Procédé selon l'une des revendications 1 à 8, caractérisé en ce qu'on effectue le codage d'une image de la séquence des images vidéo en au moins deux phases de construction d'image, du côté de la réception, à la fin de la première phase de construction d'image, on détermine une image reconstruite à partir d'un premier nombre de fonctions de base orthogonales et de coefficients pour chaque zone d'image partielle, en ce qu'à la fin de la seconde phase de construction d'image on détermine avec un second nombre de fonctions de base supplémentaires d'ordre supérieur et de coefficients supérieurs, une meilleure reconstruction de l'image, et en ce que le cas échéant, à la fin d'autres phases de construction d'images, on effectue d'autres reconstructions améliorées de l'image.

10.	Procédé selon la revendication 9, caractérisé en ce que l'on commande, selon la résolution souhaitée pour l'image, le nombre des phases de construction d'image.

Bild 1

Bild 2:

EP 0 421 186 B1

Bild 3

Bild 4

Bild 7

Bild 5            Bild 6

Kontur — Code

Grundwissen:
Ausgangspolynome

$P_{00} = 1 \quad P_{10} = x$

$P_{01} = y \quad P_{11} = x\,y\,...$

Approximationskoeffizienten
für Segmentinhalt

Rekonstruktion
der Regionenform

Gewinnung
orthogonaler Polynome
bezüglich Segment $A$:

$\tilde{P}_{00}^{A}, \quad \tilde{P}_{01}^{A},$

$\tilde{P}_{10}^{A}, \quad \tilde{P}_{11}^{A}, ...$

Rekonstruktion der
regioneninternen Grauwerte

Bild 8

Segmentform

Kontur
Codierung

Kontur – Code

Approximationskoeffizienten

Berechnung
orthogonaler
Polynome

Approximation
Segmentinhalt

Fehlerkriterium

Segmentinhalt

Berechne
Polynome höherer Ordnung

Entscheidung

INTERAKTION

Bildqualität zufriedenstellend

Bild 9